# EUROPÄISCHE PATENTSCHRIFT

(11) **EP 0 903 078 B1**
(45) Veröffentlichungstag und Bekanntmachung des Hinweises auf die Patenterteilung: **12.07.2000**
(21) Anmeldenummer: 98116810.7
(22) Anmeldetag: 04.09.1998
(51) Int. Cl.: A01J 5/08

(54) **Melkbecheranordnung mit einem Ventil**
Teat cup with a valve
Manchon trayeur avec soupape

(30) Priorität: 15.09.1997 DE 19740537
(43) Veröffentlichungstag der Anmeldung: 24.03.1999
(73) Patentinhaber: Westfalia Landtechnik GmbH, 59302 Oelde (DE)
(72) Erfinder: Krone, Otto, 49832 Besten (DE); Wulle, Manfred, 59227 Ahlen (DE)
(74) Vertreter: Kahlhöfer, Hermann, Dipl.-Phys.

(56) Entgegenhaltungen:
- EP-A- 0 088 580
- EP-A- 0 566 977
- DE-A- 4 315 665
- US-A- 4 452 177

## Beschreibung

Die Erfindung betrifft eine Melkbecheranordnung mit einer Ventilanordnung.

Es sind Melkbecher mit einer eine Eintrittsöffnung aufweisenden Zitzenaufnahme, die durch eine elastische Zitzenhülse begrenzt ist, bekannt. Die Zitzenaufnahme ist in einem Melkbecher unter Ausbildung eines Pulsraumes angeordnet. Unterhalb der Zitzenaufnahme ist ein Anschlußstutzen für eine Melkleitung vorgesehen. Der Pulsraum wird über einen Anschluß mit einem Pulsator verbunden, wodurch die Zitzenaufnahme sequentiell eine Kraft auf eine Zitze ausübt, wenn diese in der Zitzenaufnahme angeordnet ist. Über die Melkleitung wird innerhalb der Melkbecheranordnung ein Unterdruck erzeugt, durch den die aus der Zitze austretenden Milch abgesaugt wird.

Durch die EP 0 088 580 B1 ist ein derartiger Melkbecher bekannt. Dieser Melkbecher weist auch einen kugelförmigen Verschlußkörper auf, durch den ein Abschluß des Anschlußstutzens für eine Melkleitung erreicht wird. Der Abschluß des Anschlußstutzens am Ende des Melkvorganges ist jedoch nur dann möglich, wenn Atmosphärenluft manuell am Kopf der elastischen Zitzenhülse eingelassen wird. Die kurzzeitig nach jedem Melkvorgang eingelassene Luft führt zu unerwünschten Vakuumschwankungen und Milchverwirbelungen in der Melkleitung.

Durch die DE 43 15 665 A1 ist eine Melkbecheranordnung mit einer, eine Eintrittsöffnung aufweisenden Zitzenaufnahme, die durch eine elastische Zitzenhülse begrenzt ist, eine Melkbecherhülse, in der die Zitzenhülse unter Ausbildung eines Pulsraums angeordnet ist, und mit einem Anschlußstutzen für eine Melkleitung bekannt. Unterhalb der Zitzenaufnahme weist die Melkbecheranordnung eine Ventilanordnung auf, durch die der Strömungsweg in eine Schließstellung geschlossen und in eine Offenstellung geöffnet ist. Zur Betätigung der Ventilanordnung ist an der Melkbecherhülse ein Betätigungselement vorgesehen.

Durch die EP 0 566 977 B1 ist eine Melkbecheranordnung bekannt, die im Strömungsweg unterhalb der Zitzenaufnahme eine Ventilanordnung aufweist. Die Ventilanordnung hat einen in einem Ventilraum vorgesehenen Ventilkörper, durch den der Strömungsweg in einer Schließstellung geschlossen und in einer Offenstellung geöffnet ist. Die Ventilanordnung wird in einer Offenstellung durch eine manuelle Bewegung des Melkbechers nach unten geöffnet. Die EP 0 566 977 B1 schlägt ferner vor, daß eine Betätigung der Ventilanordnung auch durch eine seitliche Bewegung des Melkbechers erreicht werden kann.

Beim Abnehmen der Melkbecheranordnung durch eine seitliche Bewegung des Melkbechers wird die Zitze, die noch unter Melkvakuum steht, physisch belastet. Ferner hängt die Funktionsfähigkeit von der Beschaffenheit insbesondere der Steifigkeit der weitergehenden Milchleitung ab, da diese die Gegenkraft zur Bewegung des Melkbechers aufnehmen muß, damit das Ventil geöffnet bzw. geschlossen werden kann.

Hiervon ausgehend liegt der vorliegenden Erfindung die Aufgabe zugrunde die Melkbecheranordnung so weiter zu bilden, daß ein Öffnen bzw. Schließen des Strömungsweges durch die Ventilanordnung vereinfacht wird. Ein weiteres Ziel der Erfindung ist es die Melkbecheranordnung so auszubilden, daß der Ventilkörper in seiner Schließstellung selbsttätig gelangt, wenn die Melkbecheranordnung von einer Zitze während eines noch nicht beendeten Melkvorgangs abgeschlagen wird.

Diese Aufgabe wird durch eine Melkbecheranordnung mit dem Merkmal des Anspruch 1 gelöst. Vorteilhafte Weiterbildung und Ausgestaltung einer Melkbecheranordnung sind Gegenstand der Unteransprüche.

Die erfindungsgemäße Melkbecheranordnung weist ein Betätigungselement auf, welches mit der Ventilanordnung verbunden ist. Das an der Melkbecherhülse angeordnete Betätigungselement ist hülsenförmig ausgebildet. Das Betätigungselement ist auf der Melkbecherhülse so gleitend geführt, daß dieses zum Schließen des Strömungsweges von der Eintrittsöffnung weg und zum Öffnen des Strömungsweges in Richtung der Eintrittsöffnung verschiebbar ist. Durch diese Ausgestaltung der Melkbecheranordnung wird erreicht, daß ein Öffnen und Schließen durch die typische Ansetz- bzw. Abnahmebewegung des Melkers erreicht wird. Damit ist eine schnelle und komfortable Handhabung der Melkbecheranordnung erreicht.

Bei einer manuellen Handhabung der erfindungsgemäßen Melkbecheranordnung umgreift der Melker beim Ansetzen des Melkbechers das Betätigungselement, da dieses auf der Melkbecherhülse angeordnet ist. Beim Ansetzen des Melkbechers stülpt der Melker den Melkbecher über die Zitze, was durch eine im wesentlichen vertikale nach oben gerichtete Bewegung geschieht. Eine Öffnung des Strömungswegs erfolgt zwangsläufig bei der erfindungsgemäßen Melkbecheranordnung erst dann, wenn die Zitzenhülse die Zitze umschließt und der Melker seine vertikal nach oben gerichtete Bewegung fortsetzt, durch die das Betätigungselement in Richtung der Eintrittsöffnung verschoben wird.

Beim Abnehmen des Melkbechers umschließt der Melker mit der Hand den Melkbecher, somit auch das Betätigungselement und führt eine vertikal nach unten gerichtete Bewegung aus, durch die der Melkbecher von der Zitze abgezogen wird. Bevor ein Abziehen des Melkbechers von der Zitze erfolgt, wird das Betätigungselement, welches den Melker umgreift, von der Eintrittsöffnung weg bewegt, so daß ein Schließen des Strömungsweges erfolgt. Dadurch, daß der Strömungsweg geschlossen wird, liegt im Melkbecher kein Unterdruck mehr an, so daß ein leichteres Abziehen des Melkbechers erreicht wird.

Im Gegensatz zu der erfindungsgemäßen Melkbecheranordnung sind bei einer Ausgestaltung der Melkbecheranordnung nach dem Stand der Technik, insbesondere nach der DE 43 15 665, mehrere Handhabungsschritte notwendig. Soweit aus der Beschreibung sowie aus der Figur 2 der DE 43 15 665 für den Fachmann erkennbar ist, muß bei dem Vorschlag nach der DE 43 15 665 der Melker nach dem Ansetzen bzw. vor dem Abnehmen des Melkbechers den Hebel betätigen.

Somit sind hierzu zwei unabhängige Arbeitsschritte notwendig, die das Anbringen eines Melkbechers erschweren. Bei der erfindungsgemäßen Ausgestaltung der Anordnung umgreift der Melker jedoch beim Ansetzen und Abnehmen des Melkbechers automatisch das hülsenförmig ausgebildete Betätigungselement zur Betätigung der Ventilanordnung.

Nicht nur, daß der Melker mehrere bei der Anordnung nach dem DE 43 15 665 Handhabungsschritte durchführen muß, er muß auch sicherstellen, daß er den Hebel zum richtigen Zeitpunkt betätigt, da nach der DE 43 15 665 die Gefahr besteht, daß das Ventil durch den Hebel zu früh geöffnet wird. Ein vorschnelles Öffnen des Ventils durch den Hebel führt dazu, daß Atmosphärenluft in die Melkleitung eingesaugt wird. Dies ist unerwünscht. Betätigt der Melker den Hebel beim Abnehmen des Melkbechers zu spät, so belastet er unnötigerweise die Zitze einer Kuh. Diese Nachteile werden bei der erfindungsgemäßen Ausbildung der Melkbecheranordnung vermieden, da der Strömungsweg entweder erst dann geöffnet wird, wenn die Zitze im Melkbecher ist, so daß keine Leckluft eingesaugt wird, oder der Strömungsweg erst geschlossen und dann die Anordnung von der Zitze abgezogen wird, so daß keine Leckluft angesaugt und die Zitze der Kuh nicht belastet wird. Durch Vermeidung einer Leckluft werden Vakuumschwankungen und Milchverwirbelungen in der Melkeinheit vermieden.

Die erfindungsgemäße Ausgestaltung der Melkbecheranordnung ist insbesondere bei einer manuellen Handhabung der Melkbecheranordnung von Vorteil. Die Verwendung der Melkbecheranordnung ist jedoch nicht nur auf die manuelle Handhabung der Melkbecheranordnung beschränkt. Die erfindungsgemäße Melkbecheranordnung kann auch in Verbindung mit automatischer Melkbecheransetztsystemen, insbesondere Robotern, verwendet werden. Bei einem automatischen Ansetzen eines Melkbechers umgreift ein entsprechender Greifer eines Robotorarms das hülsenförmige Betätigungselement und vollzieht im wesentlichen die gleiche Bewegung, wie sie beim manuellen Ansetzen der Melkbecheranordnung erfolgt. Auch das Abnehmen der Melkbecheranordnung von einer Zitze kann mittels eines automatischen Melksystems erfolgen. Hierzu umgreift ein Greifer das hülsenförmig ausgebildete Betätigungselement und vollzieht die entsprechende Bewegung. Es kann zweckmäßig sein, das Betätigungselement so auszubilden, daß dieses an die Geometrie eines Greifers eines automatischen Melksystems angepaßt ist. Die Verwendung der Melkbecheranordnung in Verbindung mit automatischen Systemen hätten den Vorteil, daß Vakuumeinbrüche bzw. Vakuumverluste durch Abnehmen der Melkbecheranordnung weitestgehend vermieden werden.

Nach einer weiteren vorteilhaften Ausgestaltung der Erfindung wird vorgeschlagen, daß der Ventilraum der Ventilanordnung über eine Öffnung in der Melkbecherhülse mit einer Umgebungsatmosphäre verbindbar ist. Diese Ausgestaltung hat den Vorzug, daß bei geschlossenem Ventilkörper über die Öffnung eine Belüftung erreicht wird, durch die der Melkbecher schonend, d.h. im wesentlichen ohne Vakuum zwischen Zitzenaufnahme und Zitze von der Zitze abgezogen werden kann.

Vorzugsweise ist die Öffnung so angeordnet, daß diese in der Schließstellung durch das Betätigungselement wenigstens teilweise verschlossen und in der Offenstellung durch das Betätigungselement freigegeben wird. Durch diese Maßnahme wird erreicht, daß während eines Melkvorgangs durch die durch die Öffnung einströmende Luft einen schnelleren Milchtransport ins Melksystem bewirkt.

Nach einer weiteren vorteilhaften Ausgestaltung der Erfindung wird vorgeschlagen, daß der Ventilkörper mit einer sich im wesentlichen senkrecht zur Längserstreckung des Ventilkörpers und diesen umgebende Membrane verbunden ist und die Membrane in ihrem Randbereich ortsfest unterhalb des Anschlußstutzens angeordnet ist. Durch die Melkleitung wird in dem Ventilraum ein Unterdruck erzeugt, wenn eine Zitze in die Zitzenaufnahme eingebracht wird. Durch den Unterdruck wird eine Kraft auf die mit dem Ventilkörper verbundene Membrane ausgeübt, durch die der Ventilkörper in der Offenstellung gehalten wird. Es ist daher nicht zwingend notwendig, daß das Betätigungselement in der Offenstellung der Ventilanordnung gehalten werden muß.

Vorzugsweise weist der Ventilkörper einen Kopf zur Anlage an einen Ventilsitz auf, wobei die Fläche des Kopfes größer ist als die Fläche der Membrane. Diese Ausgestaltung hat den Vorzug, daß der Ventilkörper in der Schließstellung sicher und zuverlässig gehalten wird.

Nach einer weiteren vorteilhaften Ausgestaltung wird vorgeschlagen, daß das Betätigungselement verdrehbar und in einer Offenstellung der Ventilanordnung festlegbar ist. Diese Ausgestaltung hat den Vorzug, daß eine Reinigung der Melkbecheranordnung ermöglicht wird. Hierdurch wird auch erreicht, daß während eines Reinigungsvorgangs stets die Offenstellung beibehalten wird und nicht durch Strömungskräfte beispielsweise eines Spülmittels eine Absperrung des Strömungsweges durch den Ventilkörper erfolgt.

Vorzugsweise weist das Betätigungselement zur Festlegung an der Melkbecherhülse eine Öffnung auf, in die ein an der Melkbecherhülse ausgebildeter Vorsprung, insbesondere rastend, einbringbar ist.

Weitere Einzelheiten und Vorteile der Erfindung werden anhand einer in der Zeichnung dargestellten bevorzugten Ausführungsform der Melkbecheranordnung erläutert. Es zeigen:
- Figur 1: eine Vorderansicht einer Melkbecheranordnung und
- Figur 2: eine Schnittansicht der Melkbecheranordnung nach Figur 1 entlang der Schnittlinie II/II.

Die Melkbecheranordnung weist eine Melkbecherhülse 1 auf. In der Melkbecherhülse 1 ist eine Zitzenhülse 2 angeordnet. Die Zitzenhülse 2 hat einen die Melkbecherhülse 1 übergreifenden Kopf 3. Der Kopf 3 weist eine Eintrittsöffnung 18 auf. Der Kopf 3 der Zitzenhülse 2 ist dichtend gegenüber der Melkbecherhülse 1 ausgebildet. Zwischen der Zitzenhülse 2 und der Melkbecherhülse 1 ist ein Pulsraum 13 ausgebildet, der über einen Stutzen 17 mit einem Pulsator, der nicht dargestellt ist, verbindbar ist. Der untere Bereich des Pulsraumes 13 ist durch ein Innenteil 4, welches in der Melkbecherhülse 1 angeordnet ist, abgedichtet. Das Innenteil 4 weist einen Ring 5 auf, durch den verhindert wird, daß die elastische Zitzenhülse 2, die aus einem gummielastischen Werkstoff besteht, sich beim Anliegen eines Unterdrucks in den unteren Bereich der Melkbecheranordnung saugt. Die Zitzenhülse 2 begrenzt eine Zitzenaufnahme 21, in die eine Zitze einbringbar ist.

Das Innenteil 4 begrenzt teilweise einen Ventilraum 12, in dem ein Ventilkörper 8 angeordnet ist. Der Ventilkörper 8 weist einen Kopf 19 auf, der an einem Stößel 9 getragen ist. Der Stößel 9 ist mit einem Betätigungselement 10 verbunden. Das Betätigungselement 10 ist im wesentlichen hülsenförmig ausgebildet. Es ist in axialer Richtung der Melkbecheranordnung bewegbar.

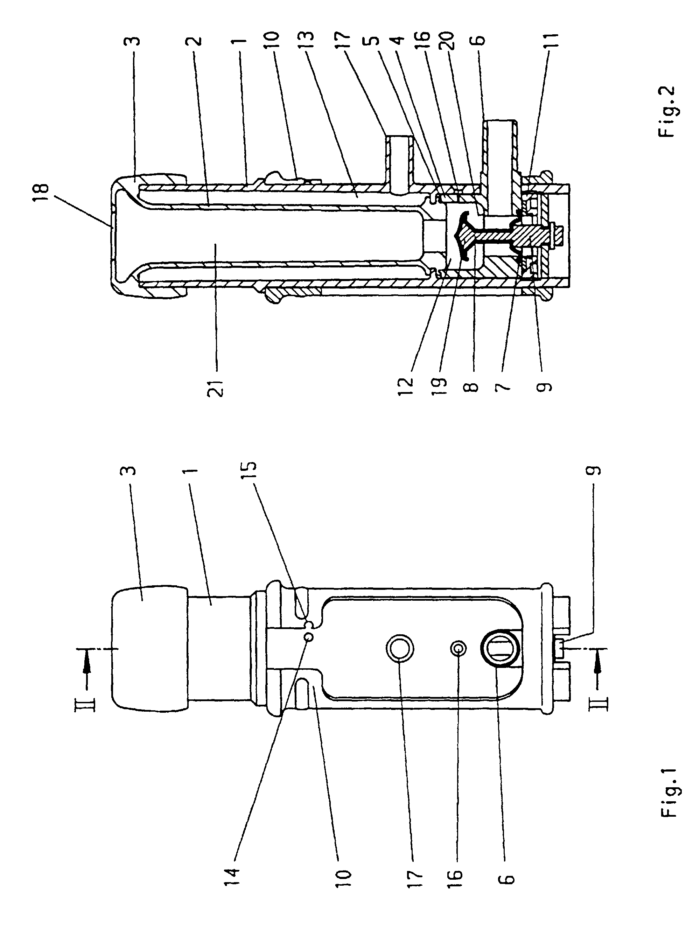

Der Kopf 19 des Ventilkörpers 8 ist zur Anlage an einem Ventilsitz 20 anbringbar. Unterhalb des Ventilsitzes 20 ist ein Anschlußstutzen 6 für eine Melkleitung angeordnet. Figur 2 zeigt den Ventilkörper in einer Offenstellung.

Der Stößel 9 ist mit einer im wesentlichen senkrecht zur Längserstreckung des Ventilkörpers 8 und den Stößel 9 umgebenen Membrane 7 verbunden. Die Membrane 7 ist an ihrem äußeren Randbereich unterhalb des Anschlußstutzen 6 ortsfest angeordnet. Zur Festlegung der Membrane 7 und des Innenteils 4 ist ein Ring 11 vorgesehen, durch den sich der Stößel 9 hindurch erstreckt und der den äußeren Randbereich der Membrane 7 und den unteren Bereich der Hülse gegen das Innenteil 4 dichtend drückt. Der Ring 11 weist ein Außengewinde auf, welches in ein Innengewinde der Melkbecherhülse 1 eingreift.

Der Stößel 9 ist mit dem hülsenförmigen Betätigungselement 10 so verbunden, daß das Betätigungselement verdrehbar ist. In dem dargestellten Ausführungsbeispiel ist das Betätigungselement 10 in der Offenstellung festlegbar. Hierzu weist das Betätigungselement 10 eine Öffnung 15 auf, in die ein an der Melkbecherhülse 1 ausgebildeter Vorsprung 14 einbringbar ist.

Beim Ansetzen der Melkbecheranordnung an eine Zitze wird das Betätigungselement 10 in Richtung der Eintrittsöffnung 18 geschoben sobald die Zitze sich vollständig innerhalb der Zitzenaufnahme 21 befindet. Der Melker umfaßt hierzu das Betätigungselement 10 und führt die typische Ansetzbewegung an der Zitze durch. Das Betätigungselement 10 ist mit dem Ventilkörper 8 starr verbunden, so daß der Ventilkörper 8 eine gleiche Bewegung wie das Betätigungselement 10 ausübt. Der Ventilkörper gibt den Strömungsweg zwischen der Zitzenaufnahme 21 und dem Anschlußstutzen 6 bzw. einer Melkleitung frei. Durch die Melkleitung wird ein Unterdruck erzeugt, der eine Kraft auf die am Ventilkörper 8 ausgebildete Membrane 7 aus. Der Ventilkörper 8 wird hierdurch in der Offenstellung gehalten, so daß die Milch in die Melkleitung gelangen kann.

Beim Abnehmen der Melkbecheranordnung wird das Betätigungselement 10 vom Melker mit einer Hand umfaßt und relativ schnell zur Melkbecherhülse 1 von der Eintrittsöffnung 18 weg verschoben. Der Ventilkörper 8 vollzieht die gleiche Bewegung wie das Betätigungselement 10. Der Kopf 19 des Ventilkörpers 8 wird zur Anlage an den Ventilsitz 20 gebracht, wodurch der Strömungsweg geschlossen wird. Während dieses Vorgangs wird die Melkbecheranordnung durch einen Unterdruck innerhalb des Ventilraumes an der sich in der Zitzenaufnahme 2 befindenden Zitze gehalten. Der Ventilkörper 8 verschließt den Strömungsweg zur Melkleitung, so daß der Innenraum der Melkbecherhülse 1 durch die Öffnung 16 belüftet wird. Ein Belüften erfolgt dabei relativ schnell, so daß die Melkbecheranordnung schonend von der Zitze abgenommen werden kann.

Die wirksame Dichtfläche des Ventilkopfes 19 ist größer als die wirksame Fläche der Membrane 7. Der Atmosphärendruck und der am Anschlußstutzen 6 anliegende Unterdruck bewirkt, daß der Kopf 19 am Ventilsitz 20 anliegt.

Wird die Melkbecheranordnung von der Zitze abgeschlagen, so strömt atmosphärische Luft über die Eintrittsöffnung 18 in den Ventilraum 12 ein. In Folge des Abfallens des Vakuums und der Luftströmung auf den Ventilkörper 8 bewegt sich die Membrane 7 nach unten und bewirkt, daß der Strömungsweg zur Melkleitung verschlossen wird. Dadurch wird eine sehr schnelle Absperrung des Melkvakuums erreicht.

Zum Spülen der Melkbecheranordnung wird durch das Betätigungselement 10 der Ventilkörper 8 in eine Offenstellung gebracht. Das Betätigungselement 10 wird um die Längsachse gedreht, so daß der Vorsprung 14 in die Aussparung 15 eingreift und das Betätigungselement 10 in dieser Stellung hält.

### Bezugszeichenliste

- 1: Melkbecherhülse
- 2: Zitzenhülse
- 3: Kopf
- 4: Innenteil
- 5: Ring
- 6: Anschlußstutzen
- 7: Membrane
- 8: Ventilkörper
- 9: Stößel
- 10: Betätigungselement
- 11: Ring
- 12: Ventilraum
- 13: Pulsraum
- 14: Stift
- 15: Öffnung
- 16: Öffnung
- 17: Stutzen
- 18: Eintrittsöffnung
- 19: Kopf
- 20: Ventilsitz
- 21: Zitzenaufnahme

## Patentansprüche

1. Melkbecheranordnung mit
einer eine Eintrittsöffnung (18) aufweisenden Zitzenaufnahme (21), die durch eine elastische Zitzenhülse (2) begrenzt ist,
einer Melkbecherhülse (1), in der die Zitzenhülse (2) unter Ausbildung eines Pulsraumes (13) angeordnet ist,
einem Anschlußstutzen (6) für eine Melkleitung und
mit einem an der Melkbecherhülse (1) angeordneten Betätigungselement (10),
wobei im Strömungsweg unterhalb der Zitzenaufnahme (21) eine Ventilanordnung mit einem in einem Ventilraum (12) angeordneten Ventilkörper (8) vorgesehen ist, durch den der Strömungsweg in einer Schließstellung geschlossen und in einer Offenstellung geöffnet ist,
dadurch gekennzeichnet, daß
das Betätigungselement (10) hülsenförmig ausgebildet ist und auf der Melkbecherhülse (1) so gleitend geführt wird, daß das Betätigungselement (10) zum Schließen des Strömungsweges von der Eintrittsöffnung (18) weg und zum Öffnen des Strömungsweges in Richtung der Eintrittsöffnung (18) verschiebbar ist.

2. Melkbecheranordnung nach Anspruch 1, dadurch gekennzeichnet, daß der Ventilraum (12) über eine Öffnung (16) in der Melkbecherhülse (1) mit einer Umgebungsatmosphäre verbindbar ist.

3. Melkbecheranordnung nach Anspruch 2, dadurch gekennzeichnet, daß die Öffnung (16) so angeordnet ist, daß diese in der Schließstellung durch das Betätigungselement (10) wenigstens teilweise verschlossen und in der Offenstellung durch das Betätigungselement (10) freigegeben wird.

4. Melkbecheranordnung nach Anspruch 1, 2 oder 3, dadurch gekennzeichnet, daß der Ventilkörper (8) mit einer sich im wesentlichen senkrecht zur Längserstreckung des Ventilkörpers (8) und diesen umgebenden Membrane (7) verbunden ist, und die Membrane (7) in ihrem Randbereich ortsfest unterhalb des Anschlußstutzens (6) angeordnet ist.

5. Melkbecheranordnung nach Anspruch 4, dadurch gekennzeichnet, daß der Ventilkörper (8) einen Kopf (19) zur Anlage an einen Ventilsitz (20) aufweist, wobei die wirksame Fläche des Kopfes (19) größer ist als die wirksame Fläche der Membrane (7).

6. Melkbecheranordnung nach einem der Ansprüche 1 bis 5, dadurch gekennzeichnet, daß das Betätigungselement (10) verdrehbar und in der Offenstellung festlegbar ist.

7. Melkbecheranordnung nach Anspruch 6, dadurch gekennzeichnet, daß das Betätigungselement (10) eine Öffnung (15) aufweist, in die ein an der Melkbecherhülse (1) ausgebildeter Vorsprung (14) einbringbar ist.

## Claims

1. Teat cup assembly comprising
a teat receptacle (21) having an inlet opening (18) and being defined by an elastic teat sleeve (2);
a teat cup casing (1) which accommodates the teat sleeve (2) while forming a pulsating chamber (13);
an outlet end (6) connecting to a milking line; and
an actuating element (10) arranged on the teat cup casing (1),
wherein in the flow passage below the teat receptacle (21) a valve arrangement is provided with a valve body (8) arranged in a valve chamber (12), which closes the flow passage in a closed position and opens same in an open position,
characterized in that
the actuating element (10) is made tubular and adapted for sliding movement along the teat cup casing (1), so that for closing the flow passage, the actuating element (10) is displaceable away from the inlet opening (18) and for opening the flow passage in direction toward the inlet opening (18).

2. Teat cup assembly of claim 1, characterized in that the valve chamber (12) can be connected via an opening (16) in the teat cup casing (10) with an ambient atmosphere.

3. Teat cup assembly of claim 2, characterized in that the opening (16) is arranged such that same is partially closed by the actuating element (10) in the closed position, and released by the actuating element (10) in the open position.

4. Teat cup assembly of claim 1, 2, or 3, characterized in that the valve body (8) is connected to a diaphragm (7) which extends substantially perpendicularly to the axial extension of the valve body (8) and surrounds same, and that the diaphragm (7) is stationarily arranged in its edge region below the outlet end (6).

5. Teat cup assembly of claim 4, characterized in that the valve body (8) comprises a head (19) for contacting a valve seat (20), the effective surface of the head (19) being larger than the effective surface of the diaphragm (7).

6. Teat cup assembly of one of claims 1-5, characterized in that the actuating element (10) can be rotated and secured in the open position.

7. Teat cup assembly of claim 6, characterized in that the actuating element (10) has an opening (15) for engaging with a projection (14) formed on the teat cup casing (1).

## Revendications

1. Agencement de gobelet trayeur comportant
un logement de trayon (21) présentant une ouverture d'entrée (18), le logement de trayon (21) étant limité par un manchon de trayon élastique (2),
un manchon de gobelet trayeur (1), dans lequel le manchon de trayon (2) est agencé tout en formant un espace d'impulsion (13),
un raccord (6) pour un conduit de traite et
un élément de manoevre (10) agencé au niveau du manchon de gobelet trayeur (1),
un agencement de valve étant prévu dans la trajectoire d'écoulement au-dessous du logement de trayon (21) avec un corps de soupape (8) agencé dans un espace de soupape (12), la trajectoire d'écoulement étant fermée dans une position de fermeture et étant ouverte dans une position d'ouverture par le corps de soupape (8), caractérisé en ce que l'élément de manoevre(10) étant conçu en forme de manchon et est guidé sur le manchon de gobelet trayeur (1) de manière glissante telle que pour la fermeture de la trajectoire d'écoulement à partir de l'ouverture d'entrée (18) et pour l'ouverture de la trajectoire d'écoulement en direction de l'ouverture d'entrée (18) l'élément de manoevre (10) est coulissant.

2. Agencement de gobelet trayeur selon la revendication 1, caractérisé en ce que l'espace de soupape (12) peut être relié à une atmosphère ambiante par une ouverture (16) dans le manchon de gobelet trayeur (1).

3. Agencement selon la revendication 2, caractérisé en ce que l'ouverture (16) est agencée de telle manière que par l'élément de manoevre (10) celle-ci est au moins partiellement fermée dans la position de fermeture et que dans la position d'ouverture elle est libérée par l'élément de manoevre (10).

4. Agencement de gobelet trayeur selon la revendication 1, 2 ou 3, caractérisé en ce que le corps de soupape (8) est relié à une membrane (7) s'étendant sensiblement verticalement à l'étendue longitudinale du corps de soupape (8) et entourant celui-ci et que dans sa zone de bord la membrane (7) est agencée de façon stationnaire au-dessous du raccord (6).

5. Agencement de gobelet trayeur selon la revendication 4, caractérisé en ce que le corps de soupape (8) présente une chapeau (19) pour prendre appui contre un siège de soupape (20), la surface active du chapeau (19) étant plus grande que la surface active de la membrane (7).

6. Agencement de gobelet trayeur selon l'une des revendications 1 à 5, caractérisé en ce que l'élément de manoevre (10) peut être tourné et peut être défini dans la position d'ouverture.

7. Agencement de gobelet trayeur selon la revendication 6, caractérisé en ce que l'élément de manoevre (10) présente une ouverture (15) dans laquelle peut être introduite une saillie (14) conçue au niveau du manchon de gobelet trayeur (1).
